(19) 

**Europäisches Patentamt**
**European Patent Office**
**Office européen des brevets**

(11) **EP 4 379 631 A1**

(12) **EUROPEAN PATENT APPLICATION**
published in accordance with Art. 153(4) EPC

(43) Date of publication:
**05.06.2024 Bulletin 2024/23**

(21) Application number: **22848294.9**

(22) Date of filing: **15.07.2022**

(51) International Patent Classification (IPC):
*G06Q 20/10* (2012.01)    *G06Q 20/36* (2012.01)
*G06Q 20/38* (2012.01)

(52) Cooperative Patent Classification (CPC):
**G06F 21/57; G06Q 20/06; G06Q 20/10;**
**G06Q 20/32; G06Q 20/36; G06Q 20/38;**
**G06Q 20/40**

(86) International application number:
**PCT/CN2022/105960**

(87) International publication number:
**WO 2023/005689 (02.02.2023 Gazette 2023/05)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.07.2021 CN 202110860218**

(71) Applicant: **Nie, Ming**
**Shanghai 200120 (CN)**

(72) Inventor: **Nie, Ming**
**Shanghai 200120 (CN)**

(74) Representative: **Lermer, Christoph**
**Nove Haus - Design Offices**
**Luise-Ullrich-Straße 14**
**80636 München (DE)**

(54) **DIGITAL WALLET DEVICE AND DUAL OFFLINE TRANSACTION METHOD THEREOF**

(57)    A digital wallet device (1) based on an identification ledger and a dual offline transaction method thereof. The digital wallet device (1) comprises a secure element (11) and a communication module (12). The communication module (12) is used to perform near field communication with another digital wallet device (1), and can comprise one or more of a Bluetooth module, an NFC module, an infrared communication module, and a wireless local area network module. The secure element (11) further comprises an identification ledger system (14) and an encryption and decryption module (13). The identification ledger system (14) comprises at least one identification ledger (141), and each identification ledger (141) is used to store and update a transaction record of the digital wallet device (1). The secure element (11) calculates a balance of each identification ledger (141) according to the transaction record. The secure element (11) stores a unique identity (ID) of the digital wallet device (1). The encryption and decryption module (13) completes, by means of a mapping algorithm, the calculation for obtaining a public key in the secure element (11) on the basis of the unique ID of the digital wallet device (1).

FIG 1

**Description**

FIELD OF THE INVENTION

The present invention relates to digital currency and digital wallet technology and in particular, to a digital wallet device based on an identity-based ledger and a method for offline transactions via a digital wallet device.

BACKGROUND OF THE INVENTION

In recent years, with the further development of information technology and the accelerated popularization of smart devices, electronic payment has been playing an important role in people's lives. In this case, how to achieve deeper digitization in the payment and even financial fields has become a new topic of concern, and the concepts of digital currencies and digital wallets are getting hotter and hotter with the development of blockchain technology and the promotion of associated applications. Since 2019, the subject of central bank digital currencies has been paid attention to and focconfigured on in many countries around the world, and the related technology and management models are also constantly developing.

However, the existing electronic payment means rely heavily on the centralized Internet and PKI system, and the transactions between devices are essentially storing some records and credentials for the transactions, and what really converts the records of these transactions into value is the clearing and settlement carried out with the back office. Therefore, even some of the so-called offline transaction methods, the assets after the transaction can not be configured and circulated in a timely manner under the condition of ensuring security. Traditional technologies based on the Internet and PKI systems are unable to break through the dependence on the centre, and they are unable to realistically achieve the function of digital currency value (CV) circulation, and they are unable to allow digital currencies to self-certify their value in the circulation process. To break this shackle, new peer-to-peer security technology and the ability to give local transaction records the ability to truly record value are needed to achieve peer-to-peer trusted authentication and transactions between devices, with sufficient security capabilities to prevent counterfeiting, tampering, theft, and double-spending behavior.

SUMMARY OF THE INVENTION

For this reason, it is necessary to provide secure and trustworthy, convenient and easy-to-use devices for the use of digital currencies, as well as efficient dual offline transaction methods similar to traditional cash.

The present invention provides a digital wallet device characterised in that it comprises:

a security element, and a communication module; wherein the communication module is configured for proximity communication with other digital wallet devices; and the communication module may comprises one or more of a Bluetooth module, an NFC module, an infrared communication module, and a wireless local area network module;

wherein the security element (SE) further comprises an identity-based ledger system and an encryption and decryption module; wherein the identity-based ledger system comprises at least one identity-based ledger; wherein each identity-based ledger is configured for storing and updating transaction records of the digital wallet device; the security element is configured for calculating the balance of each identity-based ledger based on the transaction records; wherein the security element is configured for storing a unique identity-based ledger ID of the digital wallet device; and wherein the encryption and decryption module is configured for completing the computation of a public key based on a unique ID of the digital wallet device within the SE by means of a mapping algorithm.

Wherein,

the encryption and decryption module is configured for storing and managing local keys and using the keys for encrypting and decrypting communication instructions and transaction information, and signing and verification of signatures;

each identity-based ledger comprises an identity-based ledger header and an identity-based ledger body;

the identity-based ledger header comprises an issuer account number (IAN) as the issuer unique identify and a total amount issued by the issuer to the digital wallet device (CV);

the identity-based ledger body comprises a number of chronological transaction records; each transaction record further comprises the amount of the transaction, the unique number of the payer's account (SAN), the unique number of the payee's account (TAN), the payer's digital signature for the transaction (SSD), and the payee's digital signature for the transaction (TSD).

Wherein,

the identity-based ledger header further comprises a unique identification number assigned to the ledger by the issuer (ISN, issue serial number,), a timestamp for ledger generation (TS, timestamp), and a cryptographic hash value calculated using the IAN, ISN, TS, and CV.

Wherein,

the first transaction record of the identity-based ledger body has the issuer as the payer; the first transaction record further comprises the hash value of the identity-based ledger header;

each transaction record in identity-based ledger body further comprises a hash value of the previous transaction, a transaction serial number value, and a transaction timestamp.

Wherein,

the latest transaction record for each identity-based ledger with the local digital wallet device as the payer or payee of the transaction.

Wherein,

the amount of the identity-based ledger for the digital wallet device is the difference in transaction amount of the last transaction for which this digital wallet device was the payee and the total transaction amount of all transactions in which the digital wallet device was the payer after the last transaction for which this digital wallet device was the payee.

Wherein,

the digital wallet device further comprises an input module and a display module;

the input module is configured for entering transaction information may comprising a key board or a touch screen;

the display module is configured for displaying transaction information.

The present invention further provides a method for dual offline transactions of a digital wallet device, characterized in that the method comprises:

step 1, two-way authenticating, by digital wallet device A, each other with wallet device B mutually based on identify;

and step 2, selecting, by the security element inside the digital wallet device A, after receiving a transaction preparation, determining the number of identity-based ledgers required for this transaction based on the required payment amount and the balance of the local identity-based ledger based on, only one identity-based ledger to be configured if the total amount of this payment is less than or equal to the maximum value of the amount available for a single identity-based ledger, otherwise multiple identity-based ledgers to be configured;

and step 3, generating, by the security element inside the digital wallet device A, a new identity-based ledger L1 by adding a transaction preparation data message to the end of one of the selected identity-based ledger L0 as the last current transaction record, after which L1 is sent to wallet B and verified by wallet B, wherein the transaction preparation data message comprising the transaction amount of the transaction, the account identifiers of the source and target parties, and the signature of the digital wallet A for the transaction;

step 4, adding, by the security element inside the digital wallet device A, a signature of digital wallet device A to the last transaction record of identity-based ledger L1 to be saved as an identity-based ledger L2 for subsequent transactions, after receiving the transaction confirmation data message with a signature of digital wallet device B and verifying the signature of digital wallet device B, wherein the transaction confirmation data message comprising the transaction preparation data information for this transaction, a signature of digital wallet device A and a signature of digital wallet device B;

and step 5, repeating, by the security element inside the digital wallet device A, step 3-5 for the next identity-based ledger selected to participate in the transaction, if determined based on the transaction information that not all the identity-based ledgers for this transaction processed, until the transaction completed for all identity-based ledgers in this transaction.

Wherein,

the transaction preparation data information further comprises a hash value of a previous transaction, a transaction serial number value and a transaction timestamp.

Wherein,

after the step 3 the method further comprises:

step 3-1, verifying, by digital wallet B, the digital signature of digital wallet A and the authenticity and legality of this transaction after receiving the identity-based ledger L1 and related transaction information, wherein the verifying may comprise calculating the amount of money available in the identity-based ledger L0 for A and comparing it to the amount of the transaction to determine whether the transaction is legitimate;

and step 3-2, generating, by digital wallet B, a transaction confirmation data message by adding a signature of digital wallet B to the end of transaction preparation data message in ledger L1 as an identity-based ledger L2 for subsequent transactions, after which sending the transaction confirmation data message to digital wallet A.

Wherein,

the two-way authenticating process described in step 1 may further comprise:

step 1-1, calculating, by digital wallet device A, a signature (C1 S1) through a 8-byte random number R1 generated by A and the CCKS identifier of A, ID1, sent to digital wallet device B via an authentication and key exchange instruction, the necessary parameters of which are ID1, R1, C1, and S1;

and step 1-2, verifying, by the digital wallet device B, the signature (C1 S1) by the public key of digital wallet device A, PUB 1 calculated via ID1, after receiving the authentication and key exchange instruction and confirming the legitimacy of ID1 through the black list (or white list) and/or ID rules; and calculating, by the digital wallet device B, the signature (C2 S2) to ENC2 that is obtained by using public key PUB 1 to encrypt a random number R2 generated by the digital wallet device B, as well as obtaining the CCKS identifier ID2 of digital wallet device B and obtaining the process key K by dissimilarity between R1 and R2, if passing the signature verification which indicated that the digital wallet device A is legitimate; and returning, by the digital wallet device B, following data to the digital wallet device A: ID2, ENC2, C2, S2, and response code, after completing the above calculations, as well as ending the authentication and key exchange command processing;

and step 1-3, calculating, by the digital wallet device A, the public key of digital wallet device B (PUB2) after receiving the returned message, authenticating the legitimacy of ID2 through the blacklist (or whitelist) and/or ID rules and if it's passed; and verifying, by the digital wallet device A, the signature (C2 S2) by using PUB2; and calculating, by the digital wallet device A, the process key K that is configured for encrypted communication in subsequent steps by dissimilarity between R1 and R2 that is obtained by decrypting ENC2 by the private key of digital wallet device A, if the verification to (C2 S2) is passed, which indicated that the digital wallet device B is legitimate.

The present invention can realize at least the following beneficial effects:

With the digital wallet device and its offline transaction method of the present invention, the identification authentication technology is configured to assign a unique identity ID to each device, and then an identity-based ledger system is established based on the identity-based authentication technology, and transaction records are recorded through the identity-based ledger, and signatures are exchanged between the counterparties in the course of the transaction, so as to realize secure and trustworthy peer-to-peer offline transactions.

Based on the identity-based authentication technology, the ID of digital wallet devices is strongly bound to the hardware, and a strong correlation is established with the corresponding public key through the public key mapping algorithm, which allows the digital wallet devices to complete mutual authentication directly through the exchange of the identity ID, and ensures that the digital wallet devices can realize peer-to-peer dual offline authentication.

Through the combination of SE and identity-based authentication technology, local devices are prevented from tampering with and deleting transaction records. At the same time, the association between transaction records is established through the preservation of the hash of the previous transaction record by each transaction record in each identity-based ledger, and each transaction contains the IDs of the signatures of both parties to the transaction, which allows the digital wallet device to locally verify the signatures of any transaction, ensures that past transaction records can be verified locally, and solves the problem of counterfeiting and double-spending in dual offline transactions.

Recording transactions through the identity-based ledger and the transaction records in the identity-based ledger ensures that every transaction can be traced back and prevents repudiation after the transaction is completed. After the completion of each transaction, both parties can immediately use the new identity-based ledger to conduct transactions again, there is no transaction cooling-off period and no need to immediately settle with the backend, thus truly realizing instant and continuous transactions that can be double offline.

The available amount of the device is identified through the identity-based ledger and the transaction record in the identity-based ledger, replacing the traditional balance record, ensuring that the legitimacy of the transaction amount during the transaction process can be verified locally and guaranteeing the authenticity of the transaction amount within the transaction record, and preventing the counterfeiting of the balance or the transaction amount.

The digital wallet device and its dual offline transaction method provided by the present invention, through the combination of identification authentication technology and identity-based ledger, truly realizes a safe and trustworthy value transfer of digital currency, achieves peer-to-peer dual offline transactions and allows for continuous transactions, with each transaction verifiable and traceable, prevents counterfeiting, tampering, stealing, and double-spending, and promotes the safe, convenient, and reliable circulation of digital currencies in different scenarios.

BRIEF DESCRIPTION OF THE DRAWINGS

FIG. 1 is a schematic diagram of the structure of a digital wallet device of one embodiment of the present invention;
FIG. 2 is a schematic diagram of a structure of an identity-based ledger of an embodiment of the present invention;
FIG. 3 is a schematic diagram of the structure of a single transaction record of an embodiment of the present invention;
FIG. 4 is a data structure diagram of a single transaction record of a preferred embodiment of the present invention;
FIG. 5 is a schematic diagram of the structure of multiple transaction records of a preferred embodiment of the present invention;

FIG. 6 is a schematic diagram of a flow of offline transactions based on a digital wallet device of the present invention.

## DETAILED DESCRIPTION OF THE INVENTION

The technical solutions in the embodiments of the present invention will be clearly and completely described below in conjunction with the accompanying drawings in the embodiments of the present invention, and it is clear that the described embodiments are only a part of the embodiments of the present invention and not all of the embodiments. Based on the embodiments in the present invention, all other embodiments obtained by a person of ordinary skill in the art without making creative labor fall within the scope of protection of the present invention.

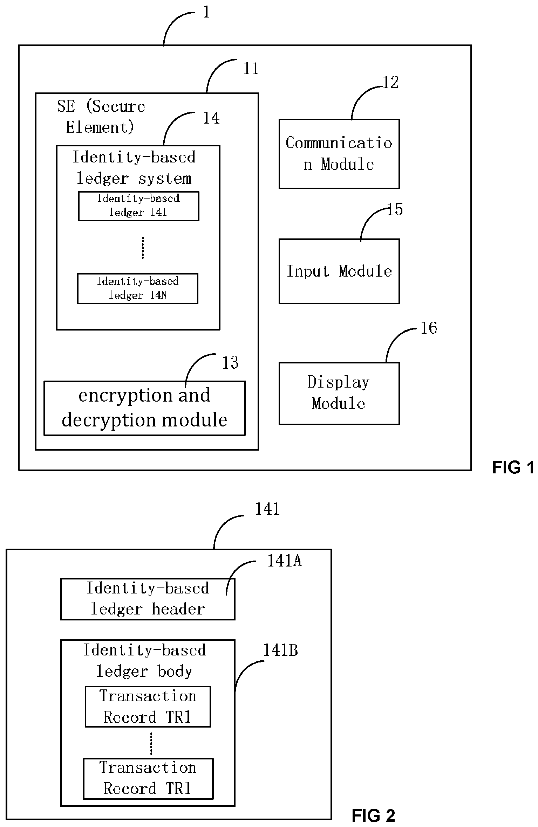

A schematic diagram of the structure of a digital wallet device 1 based on identity-based ledgers according to the present invention is shown in Figure 1. The digital wallet device form can be a separate hardware or a Trusted Execution Environment TEE (Trusted Execution Environment). Wherein the digital wallet device 1 comprises an SE (Secure Element) 11, a communication module 12, an encryption and decryption module 13 and an identity-based ledger system 14, wherein the encryption and decryption module 13 and the identity-based ledger system 14 are stored in the SE 11.

Preferably, the digital wallet device 1 may further comprise an input module 15 and a display module 16.

Wherein, the SE 11 holds a unique device account number (DAN) of the digital wallet device 1 and is assigned a corresponding transaction private key by the encryption and decryption module 13, which has a secure computing and secure storage function. The secure computation could be one that supports asymmetric encryption algorithms and is resistant to bypass attacks and analysis of the computation process. The secure storage means that the contents of its storage device cannot be directly accessed from outside SE. Each SE 11 is recorded with a version number, a batch number.

The identity-based cryptography of the present invention supports the computation of the public key directly from the ID, viz:

$$Pub_{key} = Pub(ID)$$

Wherein: $Pub_{key}$ is the public key; Pub() is the public key mapping function, which can be calculated from the ID to derive the public key value; ID is the device account identification.

The communication module 12 is mainly configured for proximity communication, and the communication methods that can be configured include one or more of the proximity communication methods such as Bluetooth and NFC, infrared communication modules, wireless LAN modules, and the like.

The encryption and decryption module 13 is integrated within the SE 11 for storing and managing the local key, as well as performing operations such as encryption and decryption of identity-based ledger data and transaction process data, and signature verification. The mapping algorithm of the encryption and decryption module realizes a strong binding relationship with the public key of the digital wallet device. Because there is a strong binding relationship between the public key and the unique identification ID of the digital wallet device, the unique identification ID can be directly calculated in the SE according to the unique identification ID, so that the danger of imitation such as man-in-the-middle attack can be avoided, and a third-party certificate is not required for proof. The identity-based authentication technology configured in the present invention is the CCKS technology, which has the characteristics of supporting a single-domain super-large key capacity and supporting offline peer-to-peer authentication, and can provide support for offline transactions and verification of the identity-based ledger.

The identity-based ledger system 14 of the present invention comprises a plurality of identity-based ledgers 141-14n, and the storage structure of each identity-based ledger further comprises an identity-based ledger header and an identity-based ledger body, the specific structure of which is shown in FIG. 2 using the identity-based ledger 141 as an example. This includes an identity-based ledger header 141A for recording ledger amount information, and an identity-based ledger body 141B for sequentially recording a plurality of transaction records TR1-TRN in the identity-based ledger.

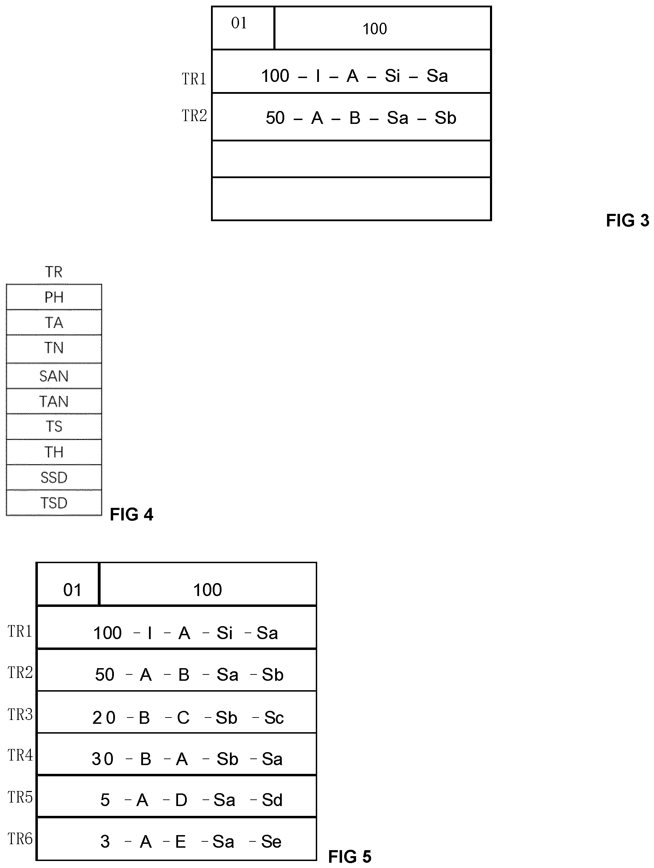

Wherein, the identity-based ledger header 141A is generated by the issuer and is primarily configured to represent the total amount of the ledger. It may include an IAN (issuer account number), which is the unique identifier of issuer account, and a total amount CV (currency value), which represents the amount released by the issuer to the digital wallet device. For example, as shown in FIG. 3, a schematic diagram of an identity-based ledger according to an embodiment of the present invention is shown, wherein "01" in the header of the identity-based ledger indicates the issuer's unique identification of the issuer's issuer account, and " 100" indicates that the amount of money issued by the issuer to the digital wallet device is 100, and it is to be understood that the issuer's issuer account number is the issuer account number. It is to be understood that the issuer may be an organization qualified to legally issue digital currencies in various countries or regions of the world, such as the People's Bank of China, etc., and the unit of the amount may be yuan, or may be dollars, euros, etc.

Preferably, the identity-based ledger header may further include a unique identification of the ledger by the issuer (ISN, issue serial number); a timestamp generated by the ledger (TS, timestamp); and an encrypted hash (HH, header hash) computed by the encryption and decryption module 13 using the IAN, the ISN, the TS, and the CV. Among them, the encrypted hash algorithm can be a currently common algorithm, such as: SHA2, SHA3, SM3, etc.; signature (ISD, issuer signature data) calculated using the private key corresponding to the IAN, in which ISD can be obtained by ECDSA signature algorithm based on Secp256R1-elliptic curve, using the private key $[\![Key]\!]\_IAN$ corresponding to the issuing account to calculate the signature of HH. Its structure can be shown in Fig. 4.

Wherein the identity-based ledger body 141B includes a number of transaction records TR1-TRn arranged in chronological order. each transaction record may include a transaction amount TA, a unique number SAN of the account of the source party of the transaction, a unique number TAN of the account of the target party of the transaction, a signature SSD (source signature data) of the source party of the transaction for the transaction, and a signature algorithm may be computed from the private key corresponding to the SAN, the algorithm is the same as ISD, which is ECDSA signature algorithm based on Secp256R1-elliptic curve, and the signature TSD (target signature data) of the target party of the transaction for the transaction, which can be computed from the private key corresponding to the TAN, the algorithm is the same as above.

Both the above encryption and signature processes are encrypted and decrypted by the encryption and decryption module 13.

Still referring to as shown in FIG. 3, wherein the identity-based ledger body below the ledger identity header records two transaction records.

Wherein 100 indicates that the first transaction amount is 100; Identifier I indicates that the source party of the transaction is an issuer account ID; Identifier A indicates that the target party of the transaction is a digital wallet device ID with a device account number A; Wherein Si and Sa are the signatures of the transaction by the issuer account I and the digital wallet device A, respectively.

And so on, the second transaction has an amount of 50, the source account is the digital wallet A account, and the target account is the digital wallet B account, where Sa and Sb are the signatures of the digital wallet A and the digital wallet B, respectively, for the transaction.

Preferably, the transaction record information may also include a hash value PH of the previous transaction, a serial number value TN of the current transaction, a transaction timestamp TS, and a transaction hash value TH. As shown in FIG. 4, a schematic diagram of a preferred identity-based ledger main body data structure of the present invention is shown.

Note that the source party in the first transaction record in the identity-based ledger body is the corresponding issuer, so that the first transaction record does not include the hash value of the previous transaction, but does include the hash value of the identity-based ledger header.

Wherein the previous transaction hash (PH), is computed using a cryptographic hash algorithm on the data of the previous transaction record, wherein the previous transaction hash of the first transaction is computed on the data of the identity-based ledger header. The cryptographic hash algorithm of the present invention uses the SHA3 algorithm. All of the above hash encryption processes are encrypted and decrypted through the encryption and decryption module 13.

Wherein the serial number (TN, transaction number) of this transaction is generated sequentially by the digital wallet of the party from which the transaction originated.

It should be noted that the latest transaction record of each identity-based ledger should be a transaction record of the digital wallet device as a payer or a receiver. The rule for calculating the balance of each identity-based ledger of the present invention is that the difference between the transaction amount of the last transaction record of the digital wallet device as the target party of a transaction within each identity-based ledger and the total transaction amount of all the transaction records of the terminal device as the source party of the transaction after that transaction record is the available amount of the identity-based ledger for that terminal device. For example, in the identity-based ledger shown in FIG. 5, the balance for digital wallet A at this time is 22 = 30-5-3, which is because according to the above rule, the transaction records of digital wallet A as the target party are TR1 and TR4, respectively, and the transaction amount of the last transaction TR4 is taken to be 30, which is calculated by subtracting the transaction amounts of the transaction records of digital wallet A as the source party TR5 and TR6. The amount is calculated.

The maximum amount that can be paid by the payer of each transaction record is the amount that was available to the payer in the identity-based ledger prior to the generation of that transaction record, and transactions exceeding that available amount cannot be signed.

In the event of an anomaly during a transaction, a transaction record in the identity-based ledger may be incomplete and may not include the signature of one of the parties to the transaction, which is illegal, and therefore the transaction amount involved in this transaction record may not be subject to a payment transaction, and will also be locked, and will not be able to be configured additionally until it is reconciled with the back office.

Further, the digital wallet device of the identity-based ledger may also include an input module and a display module. The input module may be a small input device integrated on the device, such as a touch screen or a keyboard, for inputting transaction information, such as transaction amount, transaction confirmation information, and the like. The display module may be a display device such as an electronic display screen or the like integrated on the outside of the device for displaying transaction information, which may include information to be confirmed at the time of the transaction, transaction success information, wallet balance, and the like.

The identity-based ledger digital wallet device may or may not include an Internet communication module according to the actual use requirements. When a digital wallet device that does not include an Internet communication module needs to communicate with a network backend, it establishes communication with other smart terminals by means of proximity communication, and carries out Internet communication through such smart terminals.

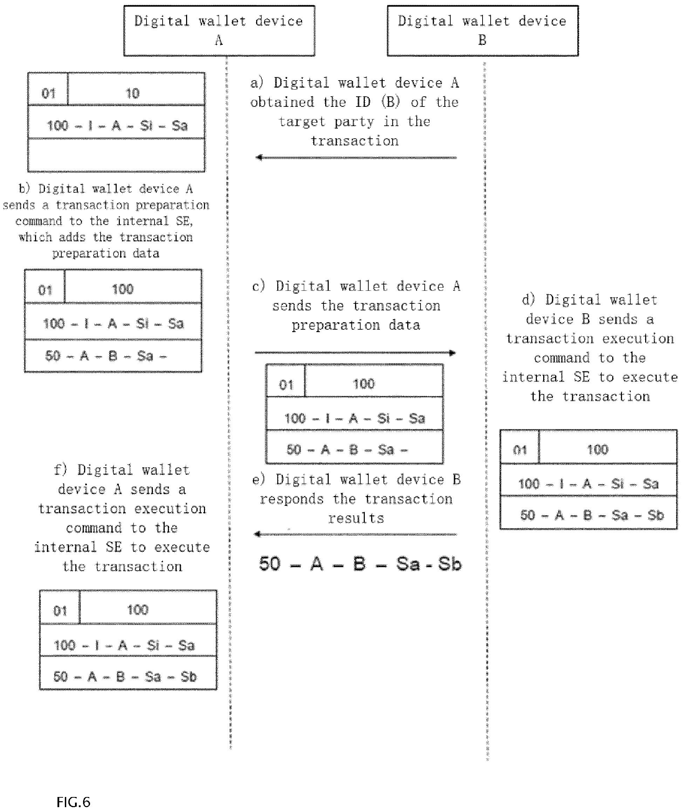

FIG. 6 is a schematic diagram of a flow of a dual offline transaction based on an identity-based ledger-based digital wallet device provided by the present invention.

In performing a dual offline transaction using the identity-based ledger-based digital wallet device provided by the present invention, the steps are as follows: First, the transaction user first uses the digital wallet device to initialize the transaction. For illustrative purposes, as shown in FIG. 6, the transaction user may be a digital wallet device A user and a digital wallet device B user.

Then, the digital wallet device A and the digital wallet device B involved in the transaction establish proximity communication. The proximity communication may be established, for example, by triggering the NFC communication by proximity contact first, followed by exchanging the Bluetooth address of the payee to establish the Bluetooth communication.

Then proceed to the offline transaction step: Step a), the user of the digital wallet device A and the user of the digital wallet device B participating in the transaction complete the two-way authentication through the exchange of their respective device identification IDs and signatures. The instructions of the above process may all use a symmetric encryption algorithm and a process key K to encrypt the instruction data as a whole. The encryption algorithm may be SM4, AES, Blowfish, DES, Triple DES, Serpent, Townish, and other publicly known algorithms. Since then, digital wallet device A and digital wallet device B have completed the authentication of both parties and obtained the process key K, and can carry out the subsequent encrypted communication.

One of the users of digital wallet device A as the transaction source (payer) or digital wallet device B as the transaction target (payee) enters the transaction amount and other information through the input module on the corresponding digital wallet device to generate a transaction instruction. It should be noted that if the input is made by the transaction target party, the transaction instruction needs to be sent to the digital wallet device as transaction source party. It is assumed here that the transaction source party is the digital wallet device A and the transaction target party is the digital wallet device B. Step b), the digital wallet device A sends an instruction to the internal SE to prepare a transaction, and the SE adds a new transaction preparation data to the end of its original identity-based ledger L0, such as "50 - A - B - Sa - _" as shown in the figure, wherein the transaction preparation data includes "50" is the transaction amount, "A" and "B" are the source and target accounts, respectively. ", wherein the the transaction preparation data includes, "50" is the transaction amount, "A" and "B" are the account identifiers of the source party and the target party, respectively identifiers, "Sa" is the signature of the digital wallet A for the transaction, and since the data has not yet been provided to the target party of the transaction, the signature of the target party of the transaction is blank:,

SE determines the total transaction amount information and related information for this transaction based on the transaction instruction, and retrieves the locally stored identity-based ledger based on the total transaction amount;

If there exists an identity-based ledger whose available amount to the digital wallet device of the transaction source party is greater than or equal to the total amount of the transaction, select that identity-based ledger to participate in the transaction; if the available amount of each identity-based ledger to the digital wallet device of the transaction source party is less than the total amount of the transaction, select more than one identity-based ledger to participate in the transaction, and distribute the total amount of the transaction among the identity-based ledgers to ensure that each identity-based ledger's transaction amount is less than or equal to the amount available to the digital wallet device of the transaction source party for that identity-based ledger;

Thus, if digital wallet device A needs to transfer an amount of $60 to digital wallet device B, and the balance against digital wallet A at this point in time in the identity-based ledger shown in FIG. 5 is 22 = 30-5-3, i.e., insufficient to pay the amount of $60, as described above, digital wallet device A would need to send two or more identity-based ledgers to digital wallet device B simultaneously For example, an identity-based ledger with a balance of $50 may be sent simultaneously as shown in FIG. 3;

Wherein the transaction preparation data information may further include a hash value of a previous transaction, a transaction serial number value, and a transaction timestamp.

Step c), the digital wallet A sends the identity-based ledger L1 containing the new transaction preparation data to the digital wallet B.

Step d), the digital wallet device B verifies the signature in the transaction record and verifies the authenticity and legality of the transaction information.

Wherein the step further comprises verifying the identification of the two parties to the transaction and checking whether the transaction amount of the identity ledger are less than or equal to the amount available in the identity ledger to the source party of the transaction, etc.; after the target party of the transaction completes the verification of the transaction record and the verification, if both pass, the hash of the transaction information will be signed and written into the new transaction record to make the transaction record complete; if the verification of the digital wallet device B fails to pass, then the transaction will be rejected, and the transaction will be terminated. The transaction ends.

Step e), the digital wallet device B of the transaction target party makes a transaction result response; specifically, signing the transaction preparation data record of the identity-based ledger L1, saving the signed identity-based ledger record as a new identity-based ledger L2 available to B, and sending the transaction confirmation data, "50 - A - B - Sa -Sb" for example, information to A. It is understood that at this time, the the transaction confirmation data information comprises the transaction preparation data information of the current transaction and the signature of the digital wallet device B; Step f): When the digital wallet device A of the transaction source party receives the transaction confirmation data information with the signature of the digital wallet device B, it verifies the signature of the digital wallet device B and the transaction confirmation data information. If the verification is passed, the signature of the digital wallet device B is added to the corresponding transaction record in the identity-based ledger L1 and saved as the identity-based ledger L2, which serves as the identity-based ledger for conducting subsequent transactions.

It should be noted that steps b)-step f) are specified only for the processing of a single identity-based ledger, and if the transaction source party needs to send multiple identity-based ledgers to the transaction target party, the transaction source party repeats steps b)-f) for the identity-based ledgers until the transaction is completed for all of the identity-based ledgers in this transaction.

If in any step there is a failure to verify the signature or verify the transaction information, it is necessary to obtain the corresponding identity-based ledger from the other party's device again to overwrite the identity-based ledger that failed the verification. If it is not possible to re-obtain the corresponding identity-based ledger, the party that fails the verification holds an identity-based ledger that contains an incomplete transaction record, and the transaction amount involved in the incomplete transaction record in the identity-based ledger cannot participate in another transaction.

The two-way authentication in step 1 is that after the two parties to the transaction have established proximity communication by exchanging IDs and signatures, the two parties can be authenticated whether their identities are legitimate or not through only one interaction, and the mutual authentication and negotiation of the process key can be completed. Specific methods comprises:

Step 1-1: Digital wallet device A generates an 8-byte random number R1, obtains its own CCKS identification ID1, and calculates a signature (C1 S1) to R1, which is sent to digital wallet device B via an authentication and key exchange instruction, the necessary parameters of which are ID1, R1, C1, and S1.

Step 1-2: After receiving the authentication and key exchange instruction, the digital wallet device B first authenticates the legitimacy of ID1 through the black list (or white list) and/or ID rules. The public key PUB1 of the digital wallet device A is obtained through the calculation of ID1, and the signature value C1 S1 is checked and signed, and if the signature is passed, it means that the digital wallet device A is legitimate, and the following steps can be carried out. Digital wallet device B generates random number R2, obtains process key K through the dissimilarity between R1 and R2, and then digital wallet device B obtains its own CCKS identification ID2, and uses public key PUB1 to encrypt R2 to obtain ENC2, and then signs ENC2 to obtain C2 S2. After completing the above calculations, digital wallet device B concludes the process of authentication and key exchange instructions, and returns the following Data to digital wallet device A: ID2, ENC2, C2, S2 and response code.

Step 1-3: When digital wallet device A receives the return, it first authenticates the legitimacy of ID2 through the blacklist (or whitelist) and/or ID rules, and after passing it, it obtains the public key PUB2 of digital wallet device A through the calculation of ID2; digital wallet device A uses PUB2 to check the signatures of C2 S2, and the passing of the signatures indicates that digital wallet device B is legitimate, and it can carry out the following process; digital wallet Digital wallet device A decrypts ENC2 with its own private key, obtains the random number R2, and obtains the process key K through the dissimilarity between R1 and R2. Since then, digital wallet device A and digital wallet device B have completed the authentication of the two sides and obtained the process key K, and the subsequent encrypted communication can be carried out.

The above-described are only preferred embodiments of the present invention, and the present invention is not limited to the above embodiments. It is understood that other improvements and changes directly derived or associated by those skilled in the art without departing from the spirit and conception of the present invention should be considered to be included in the scope of protection of the present invention.

**Claims**

1. A digital wallet device, comprising:

a security element, and a communication module;

wherein the communication module is configured for proximity communication with other digital wallet devices; and the communication module may comprise one or more of a Bluetooth module, an NFC module, an infrared communication module, and a wireless local area network module;

wherein the security element (SE) further comprises an identity-based ledger system and an encryption and decryption module; wherein the identity-based ledger system comprises at least one identity-based ledger; wherein each identity-based ledger is configured for storing and updating transaction records of the digital wallet device; the security element is configured for calculating the balance of each identity-based ledger based on the transaction records;

wherein the security element is configured for storing a unique identity-based ledger ID of the digital wallet device; and wherein the encryption and decryption module is configured for completing the computation of a public key based on a unique ID of the digital wallet device within the SE by means of a mapping algorithm.

2.  The device according to claim 1, wherein:

the encryption and decryption module is configured for storing and managing local keys and using the keys for encrypting and decrypting communication instructions and transaction information, and signing and verification of signatures;

each identity-based ledger comprises an identity-based ledger header and an identity-based ledger body;

the identity-based ledger header comprises an issuer account number (IAN) as the issuer unique identify and a total amount issued by the issuer to the digital wallet device (CV);

the identity-based ledger body comprises a number of chronological transaction records; each transaction record further comprises the amount of the transaction, the unique number of the payer's account (SAN), the unique number of the payee's account (TAN), the payer's digital signature for the transaction (SSD), and the payee's digital signature for the transaction (TSD).

3.  The device according to claim 1, wherein:
the identity-based ledger header further comprises a unique identification number assigned to the ledger by the issuer (ISN, issue serial number,), a timestamp for ledger generation (TS, timestamp), and a cryptographic hash value calculated using the IAN, ISN, TS, and CV.

4.  The device according to claim 1, wherein:

the first transaction record of the identity-based ledger body has the issuer as the payer; the first transaction record further comprises the hash value of the identity-based ledger header; each transaction record in identity-based ledger body further comprises a hash value of the previous transaction, a transaction serial number value, and a transaction timestamp.

5.  The device according to claim 1, wherein:
the latest transaction record for each identity-based ledger with the local digital wallet device as the payer or payee of the transaction.

6.  The device according to claim 1, wherein:
the amount of the identity-based ledger for the digital wallet device is the difference in transaction amount of the last transaction for which this digital wallet device was the payee and the total transaction amount of all transactions in which the digital wallet device was the payer after the last transaction for which this digital wallet device was the payee.

7.  The device according to claim 1, further comprising:

an input module and a display module;
the input module is configured for entering transaction information may comprising a key board or a touch screen;
the display module is configured for displaying transaction information.

8.  A dual-offline transaction method according to any of claims 1-7, comprising:

step 1, authenticating, by digital wallet device A, each other with wallet device B mutually based on identify;
and step 2, selecting, by the security element inside the digital wallet device A, after receiving a transaction preparation, determining the number of identity-based ledgers required for this transaction based on the required payment amount and the balance of the local identity-based ledger based on, only one identity-based ledger to be configured if the total amount of this payment is less than or equal to the maximum value of the amount available for a single identity-based ledger, otherwise multiple identity-based ledgers to be configured;
and step 3, generating, by the security element inside the digital wallet device A, a new identity-based ledger L1 by adding a transaction preparation data message to the end of one of the selected identity-based ledger L0 as the last current transaction record, after which L1 is sent to wallet B and verified by wallet B, wherein the transaction preparation data message comprising the transaction amount of the transaction, the account identifiers of the source and target parties, and the signature of the digital wallet A for the transaction;

step 4, adding, by the security element (SE) inside the digital wallet device A, a signature of digital wallet device A to the last transaction record of identity-based ledger L1 to be saved as an identity-based ledger L2 for subsequent transactions, after receiving the transaction confirmation data message with a signature of digital wallet device B and verifying the signature of digital wallet device B, wherein the transaction confirmation data message comprising the transaction preparation data information for this transaction, a signature of digital wallet device A and a signature of digital wallet device B;

and step 5, repeating, by the security element inside the digital wallet device A, step 3-5 for the next identity-based ledger selected to participate in the transaction, if determined based on the transaction information that not all the identity-based ledgers for this transaction processed, until the transaction completed for all identity-based ledgers in this transaction.

9. The method according to claim 8, wherein:
the transaction preparation data information further comprises a hash value of a previous transaction, a transaction serial number value and a transaction timestamp.

10. The method according to claim 8, after the step 3 the method further comprises:

step 3-1, verifying, by digital wallet device B, the digital signature of digital wallet device A and the authenticity and legality of this transaction after receiving the identity-based ledgers L1 and related transaction information, wherein the verifying may comprise calculating the amount of money available in the identity-based ledger L0 for A and comparing it to the amount of the transaction to determine whether the transaction is legitimate;

and step 3-2, generating, by digital wallet device B, a transaction confirmation data message by adding a signature of digital wallet device B to the end of transaction preparation data message in ledger L1 as an identity-based ledger L2 for subsequent transactions, after which sending the transaction confirmation data message to digital wallet device A.

11. The method according to claim 8, the authenticating further comprises:

step 1-1, calculating, by digital wallet device A, a signature (C1 S1) through a 8-byte random number R1 generated by A and the CCKS identifier of A, ID1, sent to digital wallet device B via an authentication and key exchange instruction, the necessary parameters of which are ID1, R1, C1, and S1;

and step 1-2, verifying, by the digital wallet device B, the signature (C1 S1) by the public key of digital wallet device A, PUB1 calculated via ID1, after receiving the authentication and key exchange instruction and confirming the legitimacy of ID1 through the black list (or white list) and/or ID rules; and calculating, by the digital wallet device B, the signature (C2 S2) to ENC2 that is obtained by using public key PUB1 to encrypt a random number R2 generated by the digital wallet device B, as well as obtaining the CCKS identifier ID2 of digital wallet device B and obtaining the process key K by dissimilarity between R1 and R2, if passing the signature verification which indicated that the digital wallet device A is legitimate; and returning, by the digital wallet device B, following data to the digital wallet device A: ID2, ENC2, C2, S2, and response code, after completing the above calculations, as well as ending the authentication and key exchange command processing;

and step 1-3, calculating, by the digital wallet device A, the public key of digital wallet device B (PUB2) after receiving the returned message, authenticating the legitimacy of ID2 through the blacklist (or whitelist) and/or ID rules and if it's passed; and verifying, by the digital wallet device A, the signature (C2 S2) by using PUB2; and calculating, by the digital wallet device A, the process key K that is configured for encrypted communication in subsequent steps by dissimilarity between R1 and R2 that is obtained by decrypting ENC2 by the private key of digital wallet device A, if the verification to (C2 S2) is passed, which indicated that the digital wallet device B is legitimate.

FIG 1

FIG 2

| 01 | 100 |
|---|---|
| TR1 | 100 – I – A – Si – Sa |
| TR2 | 50 – A – B – Sa – Sb |
| | |
| | |

**FIG 3**

TR

| PH |
|---|
| TA |
| TN |
| SAN |
| TAN |
| TS |
| TH |
| SSD |
| TSD |

**FIG 4**

| 01 | 100 |
|---|---|
| TR1 | 100 – I – A – Si – Sa |
| TR2 | 50 – A – B – Sa – Sb |
| TR3 | 20 – B – C – Sb – Sc |
| TR4 | 30 – B – A – Sb – Sa |
| TR5 | 5 – A – D – Sa – Sd |
| TR6 | 3 – A – E – Sa – Se |

**FIG 5**

| Digital wallet device A | | Digital wallet device B | |
|---|---|---|---|

| 01 | 10 |
|---|---|
| 100 – I – A – Si – Sa | |
| | |

a) Digital wallet device A obtained the ID (B) of the target party in the transaction

b) Digital wallet device A sends a transaction preparation command to the internal SE, which adds the transaction preparation data

| 01 | 100 |
|---|---|
| 100 – I – A – Si – Sa | |
| 50 – A – B – Sa – | |

c) Digital wallet device A sends the transaction preparation data

d) Digital wallet device B sends a transaction execution command to the internal SE to execute the transaction

| 01 | 100 |
|---|---|
| 100 – I – A – Si – Sa | |
| 50 – A – B – Sa – | |

f) Digital wallet device A sends a transaction execution command to the internal SE to execute the transaction

e) Digital wallet device B responds the transaction results

50 – A – B – Sa - Sb

| 01 | 100 |
|---|---|
| 100 – I – A – Si – Sa | |
| 50 – A – B – Sa - Sb | |

| 01 | 100 |
|---|---|
| 100 – I – A – Si – Sa | |
| 50 – A – B – Sa - Sb | |

FIG.6

13

## INTERNATIONAL SEARCH REPORT

| International application No. |
| --- |
| **PCT/CN2022/105960** |

| A. | CLASSIFICATION OF SUBJECT MATTER |
| --- | --- |
| | G06Q 20/10(2012.01)i; G06Q 20/36(2012.01)i; G06Q 20/38(2012.01)i |

According to International Patent Classification (IPC) or to both national classification and IPC

| B. | FIELDS SEARCHED |
| --- | --- |

Minimum documentation searched (classification system followed by classification symbols)

G06Q20/-

Documentation searched other than minimum documentation to the extent that such documents are included in the fields searched

Electronic data base consulted during the international search (name of data base and, where practicable, search terms used)

CNPAT, CNKI, WPI, EPODOC: 中城, 聂明, 双离线, 脱机, 安全芯片, 数字钱包, 数字货币, 账本, 账单, 账簿, 强关联, 强关系, 标识, 签名, 发行方, 银行, 公钥, 私钥, CKKS, IAN, CV, TAN, TSD, SSD, TEEE, SE, offline, digital cash, wallet, public key, private key

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 110766383 A (CHINA SMARTCITY TECHNOLOGY CO., LTD.) 07 February 2020 (2020-02-07) description, paragraphs [0013]-[0044], and figure 1 | 1-11 |
| Y | CN 111373429 A (PAYPAL INC.) 03 July 2020 (2020-07-03) description, paragraphs [0025]-[0073], and figures 1-9 | 1-11 |
| A | CN 1518726 A (ASK, S.A.) 04 August 2004 (2004-08-04) entire document | 1-11 |
| A | CN 111144862 A (SHENZHEN FORMS SYNTRON INFORMATION CO., LTD.) 12 May 2020 (2020-05-12) entire document | 1-11 |
| A | CN 106372942 A (CHINA SMARTCITY TECHNOLOGY CO., LTD.) 01 February 2017 (2017-02-01) entire document | 1-11 |
| A | US 2018068293 A1 (MASTERCARD INTERNATIONAL INCORPORATED) 08 March 2018 (2018-03-08) entire document | 1-11 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 September 2022** | **11 October 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/105960**

**C.    DOCUMENTS CONSIDERED TO BE RELEVANT**

| Category* | Citation of document, with indication, where appropriate, of the relevant passages | Relevant to claim No. |
|---|---|---|
| A | WO 2021005269 A1 (NORTHCRYPTO OY.) 14 January 2021 (2021-01-14)<br>entire document | 1-11 |

**INTERNATIONAL SEARCH REPORT**
Information on patent family members

International application No.

**PCT/CN2022/105960**

| Patent document cited in search report | | | Publication date (day/month/year) | Patent family member(s) | | | Publication date (day/month/year) |
|---|---|---|---|---|---|---|---|
| CN | 110766383 | A | 07 February 2020 | WO | 2020020329 | A1 | 30 January 2020 |
| CN | 111373429 | A | 03 July 2020 | WO | 2019067472 | A1 | 04 April 2019 |
| | | | | US | 2019095907 | A1 | 28 March 2019 |
| | | | | EP | 3688704 | A1 | 05 August 2020 |
| | | | | US | 2021073793 | A1 | 11 March 2021 |
| CN | 1518726 | A | 04 August 2004 | US | 2004056082 | A1 | 25 March 2004 |
| | | | | TW | 580630 | B | 21 March 2004 |
| | | | | JP | 2004534338 | A | 11 November 2004 |
| | | | | WO | 03007201 | A2 | 23 January 2003 |
| | | | | KR | 20030029948 | A | 16 April 2003 |
| | | | | BR | 0205711 | A | 15 July 2003 |
| | | | | FR | 2827058 | A1 | 10 January 2003 |
| | | | | AU | 2002329342 | A1 | 29 January 2003 |
| | | | | EP | 1412902 | A2 | 28 April 2004 |
| | | | | IN | 200301066 | P1 | 04 July 2008 |
| | | | | SG | 95398 | B | 27 January 2006 |
| | | | | ZA | 200301558 | A | 30 June 2004 |
| | | | | MX | 2003006418 | A | 20 April 2004 |
| CN | 111144862 | A | 12 May 2020 | None | | | |
| CN | 106372942 | A | 01 February 2017 | WO | 2018040651 | A1 | 08 March 2018 |
| | | | | NZ | 751163 | A | 26 November 2021 |
| | | | | AU | 2017319373 | A1 | 21 March 2019 |
| US | 2018068293 | A1 | 08 March 2018 | EP | 3293686 | A1 | 14 March 2018 |
| WO | 2021005269 | A1 | 14 January 2021 | EP | 3997647 | A1 | 18 May 2022 |

Form PCT/ISA/210 (patent family annex) (January 2015)